# EUROPEAN PATENT APPLICATION

(11) **EP 4 509 202 A1**
(43) Date of publication of application: **19.02.2025**
(21) Application number: 23191333.6
(22) Date of filing: 14.08.2023
(51) Int. Cl.: B01D 51/08, B01J 19/10

(54) **DEVICE FOR ACOUSTIC AGGLOMERATION OF ULTRAFINE SOLID PARTICLES**

(71) Applicant: Vilniaus Gedimino technikos universitetas, 10223 Vilnius (LT)
(72) Inventor: Kilikeviciene, Kristina, Vilnius (LT); Chlebnikovas, Aleksandras, Vilnius (LT); Kilikevicius, Arturas, Vilnius (LT)
(74) Representative: Pakeniene, Ausra

(57) **Abstract**

The invention is a device for forced agglomeration of dry solid particles in a gas flow. The device can be applied in a short section of the duct with contaminated gas. The device for agglomeration of ultrafine particles comprises a T-shaped acoustic chamber and an ultrasonic generator attached to it. An ultrasonic generator is exposed to a volume of gas flow that flows perpendicular to the direction of propagation of the ultrasonic waves of the ultrasonic generator.

## Description

### Technical Field

The invention relates to devices for agglomeration of solid particles, more specifically, to a device for agglomeration of ultrafine solid particles using a high intensity acoustic field.

### Technical Level

Wet and dry-cleaning devices are widely used for removal of solid particles from polluted gas streams. Operation and maintenance of dry type cleaning devices is much simpler. In addition, dry filtration can achieve the highest particle removal efficiency.

Classic air cleaning methods do not meet strict environmental requirements. Therefore, it is necessary to create a gas cleaning device capable of separating ultrafine dispersed particles from the air flow being cleaned and safely removing the cleaned air into the atmosphere. One way to increase efficiency of an air cleaning device is to force agglomeration of smallest particles. In addition to electrical, gravitational, and thermal methods of particle agglomeration, a very effective acoustic method is available, i.e., the air flow to be cleaned is affected by an acoustic field.

Acoustic agglomeration is a process in which high-intensity sound waves cause relative movement of suspended particles in a gas environment. This movement affects collision of particles, during which they stick together and form larger structures, also known as agglomerates, which in turn continue to connect with each other and become even larger. Usually, during the acoustic agglomeration of particles smaller than 1-5 µm, a sound pressure of 140-160 dB is used, and the Reynolds number is less than 0.1-0.5. In a short period of 1 s, due to acoustic agglomeration, particles stick together to a size that can be captured by traditional air cleaning devices. Acoustic agglomeration of small particles has indisputable advantages compared to other methods of particle agglomeration: the possibility of depositing finely dispersed aerosols; it can be applied for cleaning of aggressive gases; ability to work at a high pressure and temperature; energy efficient; highly efficient cleaning process; time-efficiency.

Particles moving in a liquid or gas are affected by different agglomeration mechanisms such as Brownian diffusion, coagulation, gravitational settling, hygroscopicity, turbulent diffusion, acoustic flow and electrostatics [1]. However, not all of these mechanisms are of equal importance.

Conventional dry-type cleaning systems suffer from insufficient cleaning efficiency, especially when removing fine and ultra-fine solid particles. Also, when removing low concentration particles from gas (air) flow. Other known cleaning devices, including bag filters, cause high pressure losses in the system, resulting in additional energy costs. Wet cleaning filters, including scrubbers, require additional resources during operation - water or special solutions, and, after cleaning, moist or wet waste (sludge) is generated, which must be properly managed.

A system for promoting agglomeration of ultrafine particles moving in gas is known [2]. The agglomeration system is characterized by a flow rate of approximately 60 m³/h and a mass load of 4 to 14 g/m³. The estimated mass collection efficiency in the chamber is about 93%. The collection efficiency was achieved with an energy consumption of approximately 3 kWh/1000 m³. The application of this system has only been tested at high concentration, which is more easily achieved. Evaluating the efficiency of cleaning and the initial concentration, the concentration of particles after cleaning reaches at least 280 mg/m³, which is insufficient to meet the strictest standards, where the concentration must not exceed at least 10 mg/m³ or less. One of the disadvantages of this invention is that for the effective agglomeration of solid particles, a chamber must be provided, in the entire length (volume) of which the gas flow is exposed to the emitted sound waves of 20 kHz frequency. There is a need to adjust the sound generator to generate a standing wave, and also to precisely set the wavelengths to form resonant waves suitable for agglomeration of particles of different sizes.

There is a well-known piezoelectric air-borne acoustic and ultrasonic energy generator [3] with high directivity and an efficiency of up to 80%. Generator's converter consists of a vibrating circular plate with a stepped profile, in the centre of which a piezoelectrically driven vibrator is operated. The electronic part consists of a signal generator with a very precise frequency regulator and a power amplifier.

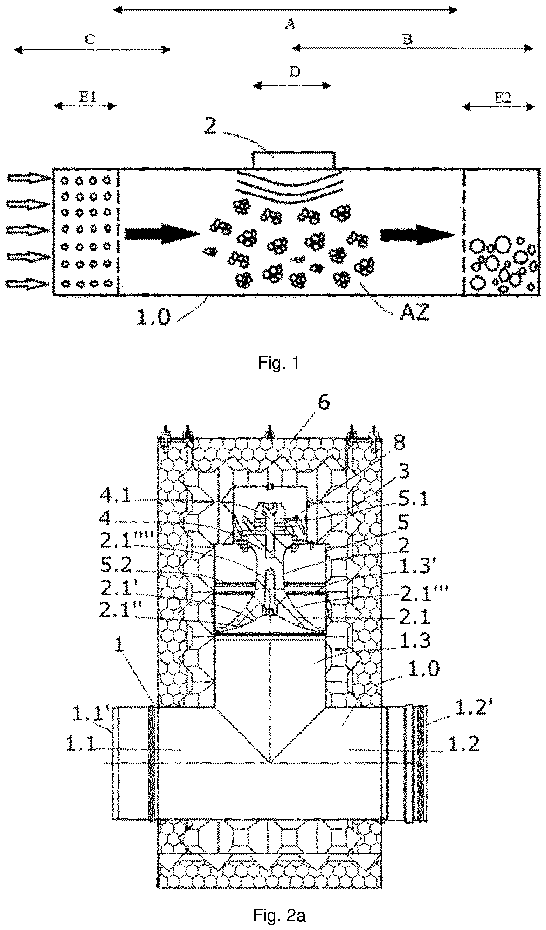

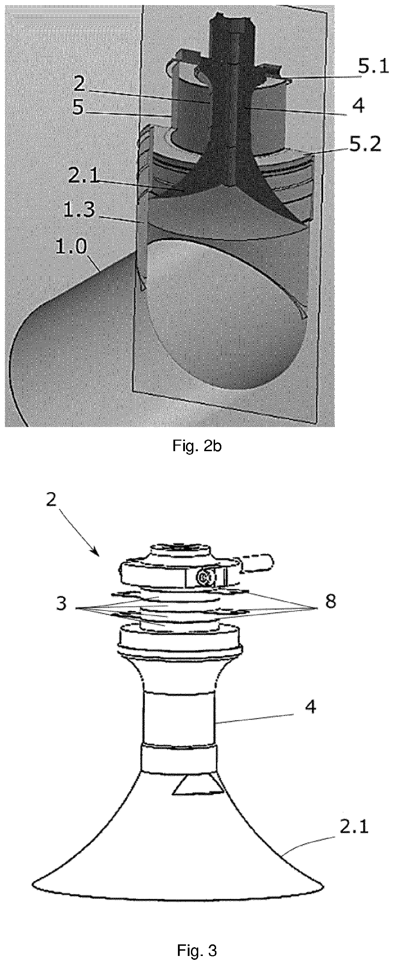

An experimental acoustic agglomeration system is also known [4], created by using the aforementioned ultrasonic generator [3]. Power of the converter is 150 W, operating at a frequency of 20 kHz, connected to a cylindrical chamber with an inner diameter of 220 mm and a length of about 2 m, in which a standing wave is generated. The system was tested as a precipitator, with an average SPL inside the chamber of 160 dB. Deposition tests of poly-disperse soot smoke (mean diameter 1 µm, standard deviation 2.2) were performed by using this system at a flow rate of about 60 m³/h and a mass loading of 4 to 14 g/m³. Experiments determined about 93% mass deposition efficiency in the chamber with an energy consumption of 3 kWh/1000 m³. Then, the ultrasonic chamber was examined as a pre-cleaning device, which is applied before the main cleaning system (cyclone, electrostatic filter, scrubber, etc.) and it was possible to clean larger streams due to the efficient agglomeration. Dynamic tests were performed to evaluate the degree of particle agglomeration as a function of acoustic intensity and treatment time. The particle size distribution was experimentally measured before and after sonication at an aerosol flow rate of about 100 m³/h. The average aerosol particle size at the chamber exit was increased by one order (treatment time 2.5 s) (initial average diameter 0.6 µm, final average diameter 9.6 µm) with a consumption of approximately 1.5 kWh of energy/1000 m³ (Fig. 2.). The experimental results confirmed advantage of using acoustic pre-treatment of fine particles to facilitate their collection by conventional precipitators with lower energy consumption.

Systems for promoting agglomeration of particles moving in gas are known [6]. A system for promoting the agglomeration of ultrafine particles moving in gas is known [2].

A multi-frequency acoustic pre-cleaning chamber based on solid particle agglomeration has been developed. The system can be used in conjunction with an electrostatic filter (EF) under industrial conditions to clean flue gas from a 0.5 MWt coal incinerator. The acoustic chamber was 3.6 m long, and the rectangular cross-section was 0.7 x 0.5 m. The exposure time of the aerosol in the acoustic chamber was about 2 s. Four cascading high-intensity 10 and 20 kHz macrosonic converters were used to achieve an average sound pressure level of about 151 dB and a maximum of 165 dB throughout the chamber volume. The temperature of the gas entering the chamber was 250 °C, the productivity was equal to 1600 m³/h, the mass load of solid particles was equal to 5 g/m³ and the numerical concentration of particles was 5 x 105 cm⁻³. Applying ultrasound to four converters with a total power of 400 W resulted in a 42% reduction in micron-sized particles compared to emissions with only an electrostatic filter [2].

The influence of humidity on ultrasonic agglomeration and precipitation formation was tested at a 20 kHz sound wave using a submicron particle aerosol (0.2 µm in size) generated by a 97 kW diesel engine. The test device used for these tests was modified by introducing a dilution system and nozzles into the ultrasonic agglomeration chamber. EF was not used because its retention efficiency was very low (about 40%) due to very small particle size and low resistivity. Ultrasonic treatment at a flow rate of 900 Nm³/h reduced the particle concentration at the outlet of the acoustic chamber by approximately 25%. This agglomeration rate increased to 56% by injecting water droplets to make the vapor moisture level about 6% (0.06 kg water/kg of gas) [2].

Application of an ultrasonic system in cleaning facilities provides an opportunity to increase size of particles in air flow due to the ongoing particle agglomeration. Thus, it is possible to create favourable conditions for the deposition of these particles in devices adapted for this purpose with a significantly higher efficiency than when applying cleaning without agglomeration, i.e. by depositing finely dispersed particles, which is significantly more complicated. In the previously discussed ultrasound systems, high-power frequency generators are used, which require a lot of electricity during operation. For the occurrence of the agglomeration effect, frequency of audible sound waves is applied as well as combined standing wave effect which is technically difficult to maintain and requires regular adjustment. High-efficiency dry cleaning devices [7], including those for ultrasonic agglomeration, with static filters have a very narrow application, taking into account dispersion composition of deposited solid particles and their concentration in gas stream, and can be applied to gas cleaning at a low level, such as, for example, 50-300 mg/m³, for particulate matter concentration. When cleaning a gas stream contaminated with solid particles, such filters are ineffective because they quickly become clogged due to fine fraction, so they require regular maintenance for their regeneration. High-efficiency electrostatic filters are used for effective removal of fine and very fine solid particles from a gas flow. Installation price and operating costs of such devices are very high, and they are not reasonable to use for cleaning small polluted gas flows, and the operating conditions for efficient work also are limited.

A method and a device for acoustic agglomeration is described in US patent No. US 4,475,921. The disclosed method and the device for agglomeration of fine solid particles in a gas flow is applied to solid particles of different sizes - from 0.5 µm to 5 µm. Main disadvantages of this method and device are that solid particle agglomeration takes place only in a part of the gas flow volume, in the particle agglomeration zone. Adjustment of a sound generator is also required for generation of a clean wave, to precisely determine wavelengths to form resonant waves suitable for agglomeration of particles of different sizes.

A device for acoustic agglomeration of particles is disclosed in US patent No. US2,215,484. The device comprises means for creating a sound field and has a high frequency standing wave generator and an acoustic chamber. Main disadvantages of this device are that only such solid particles are agglomerated at the same time, the sizes of which are distributed in a narrow range. The device creates standing waves, and the particles accumulate in the lowest pressure zones, at certain distances from the sound generator. The device generates a low/medium frequency sound field, which is not effective for small solid particles.

The invention does not have the above disadvantages related to a wide range of particle sizes, distributed over a wide range due to the forced aggregation mechanism of the solid particles, and includes additional advantages.

### Summary of the invention

The invention is a device for forced agglomeration of dry solid particles in a gas flow. The device for agglomeration of ultrafine particles comprises a T-shaped acoustic chamber and an ultrasonic generator attached to it. An ultrasonic generator is exposed to a volume of gas flow that flows perpendicular to the direction of propagation of the ultrasonic waves of the ultrasonic generator.

The pressure level of ultrasound with a frequency of 20-25 kHz reaches up to 140 dB, and the process of particle agglomeration takes less than 1s. Agglomeration can take place both under normal conditions and at high temperature up to 200 °C of gas flow and high relative humidity, up to 85% relative humidity. When the frequency is 20 kHz±0.2 kHz, the pressure level is 130-140 dB, and the direction of the acoustic impact is perpendicular to the direction of the gas flow, the amount of ultrafine solid particles in the gas flow is reduced by 70%.

The invention can be applied in a short section of a contaminated gas duct. Concentration of ultrafine solid particles is preferably from 0.1 mg/m³ to 50 mg/m³ in the particle agglomeration zone.

### Short Description of Drawings

The features of an invention that are novel and non-obvious are given in the Claims. However, the invention may be best understood by reference to the following detailed description of the invention, in which, without limiting the principle of the invention, exemplary embodiments of the invention are described in conjunction with the accompanying drawings, in which:
Fig. 1 shows agglomeration mechanisms that make an acoustic effect on ultrafine particles moving in gas.
Fig. 2 a), b) shows a longitudinal cross-section of the device according to an embodiment of the invention.
Fig. 3 shows a concentrator of the device according to an embodiment of the invention.

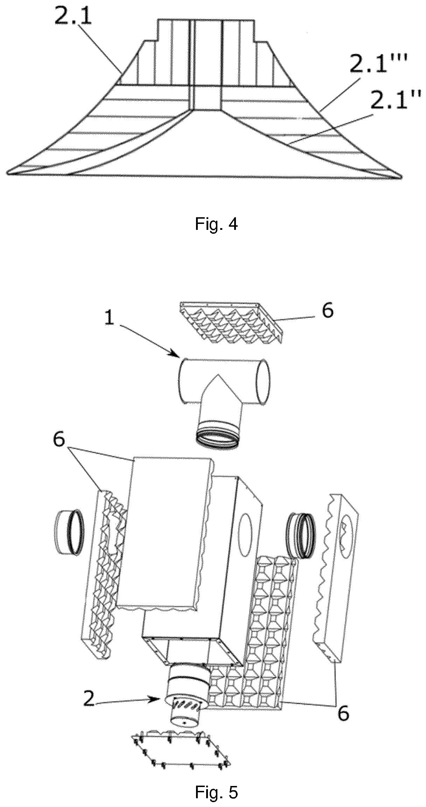

Fig. 4 shows geometry of the tulip-shaped element of the device according to an embodiment of the invention.
Fig. 5 shows exploded view of the device according to an embodiment of the invention.

Preferred embodiments of the invention are described below with reference to the drawings. Each figure has the same numbering for the same or equivalent item.

### Detailed description of the methods of implementation of the invention

It should be understood that numerous specific details are set out to provide a complete and comprehensive description of the embodiment example of the invention. However, the skilled person will understand that the level of details of embodiment examples does not limit the embodiment of the invention, which can be embodied without such specific instructions. Well-known methods, procedures and components have not been described in detail to make sure that embodiment examples are not misleading. Furthermore, this description should not be construed as limiting the embodiment examples but as a way of their implementation only.

While the examples of the invention, or aspects thereof, as shown and described, include a plurality of components depicted in a particular common space or location, some components may be remote. It should also be understood that the examples provided are not limited to the components described and include other elements necessary for their functioning and interaction with other components, the presence of which is self-evident and therefore not detailed.

According to an embodiment of the invention the device for acoustic agglomeration of ultrafine particles comprises an acoustic chamber (1) in which an agglomeration zone (AZ) of ultrafine particles is formed. The acoustic chamber (1) comprises a first branch (1.1) for gas flow entering the acoustic chamber and a second branch (1.2) for gas flow leaving the acoustic chamber (1). Both said branches (1.1, 1.2) form a uniform and straight through body (1.0), preferably cylindrical, with two openings (1.1', 1.2'), one at each end. The openings (1.1', 1.2') are of the same dimensions. The acoustic chamber (1) comprises a third branch (1.3), preferably a cylindrical hollow body, connected preferably at right angle preferably to top part of the uniform and straight through body (1.0) of the acoustic chamber (1). The first and second branches (1.1, 1.2) and the third branch (1.3) forms a T-shaped unit where the third branch (1.3) extends from the first and second branch forming a uniform and straight through body (1.0) in such a way that the gravity vector would make an angle >0° with central axis of the third branch (1.3) parallel to the length of the hollow of the third branch (1.3).

The device for acoustic agglomeration of ultrafine particles further comprises an acoustic generator (2). Acoustic wave path from the acoustic generator (2) is directed downward perpendicularly to the uniform and straight through body (1.0) and gas flow and parallel to the hollow of the third branch (1.3). The acoustic generator (2) is attached to the fee end of the third branch (1.3). The acoustic generator (2) preferably operates at a frequency of 20-25 kHz.

The device for acoustic agglomeration of ultrafine particles also comprises means for measuring concentration of particles before they enter the acoustic chamber (1) and outside the acoustic chamber (1) (not shown in the drawings).

As an example, the diameter of the uniform and straight through body (1.0) of the acoustic chamber (1) is 200 mm, the air flow speed in the system is 0.8-1.5 m/s. The gas flow inlet (1.1') and outlet (1.2') of the acoustic chamber (1) are concentric where the point of maximum pressure of the acoustic wave emitted by the acoustic generator coincides with a point in the centre line of the flow inlet (1.1') and the outlet (1.2') and the agglomeration zone encapsules entire diameter of the uniform and straight through body (1.0) straight above the entry point of sound waves from the third branch (1.3).

The device for agglomeration of particles includes four zones: an acoustic chamber zone as shown in Fig. 1, A, a particle concentration monitoring zone as shown in Fig. 1, B, a particle supply zone as shown in Fig. 1, C, and sound generation as shown in Fig. 1, D and measurement zone as shown in Fig. 1, E.

In the acoustic chamber (1), in the gas flow volume a sound pressure of at least 140 dB is formed. This is in case when the ultrasonic generator is operating at a frequency of 20-25kHz. Such frequency generator ensures that at high frequency, i.e. above 20 kHz, the entrainment factor shifts to 1. Especially in the case of small particles, this makes acoustic agglomeration particularly effective.

The method for agglomeration of ultrafine particles using device according to the invention enlarges ultrafine solid particles with sizes from 10 to 500 nm in the gas stream. The enlargement process is carried out in a section of the uniform and straight through body (1.0) for diverting the flow of contaminated gas under the direct influence of the generated constant ultrasound with a frequency of 20-25 kHz and a pressure level of up to 140 dB. The wavelength of ultrasonic waves, which is about 1.9 cm, is optimal for promoting the agglomeration of ultrafine solid particles in the gas stream. The wavelength of the ultrasound waves prevents the ultrafine particles from bypassing through the waves, and the vibration frequency of the ultrafine particles causes the particles to agglomerate particularly effectively. The ultrasound action is directed perpendicular to the flow path of the gas stream, and the process of particle enlargement takes less than 1s.

The acoustic generator (2) comprises a concentrator (2.1) for forming agglomeration zone essentially having diameter of the third branch (1.3) which, when equal to the diameter of the uniform and straight through body (1.0) of the acoustic chamber (1), covers the entire volume of space at the cross section of the uniform and straight through body (1.0) and the third branch (1.3). The concentrator (2.1) comprises a widening body with a through hole (2.1′′′′) at the centre, where the sound waves exit end (2.1') of the concentrator (2.1). The concentrator (2.1) covers the entire diameter of the third branch (1.3) to which the acoustic generator (2) is connected and disposed therein. Surface (2.1") of the concentrator (2.1) facing the uniform and straight through body (1.0) has a preferable curvature of 180° radius while surface (2.1′′′) on the opposite side of the the concentrator (2.1) has a preferable curvature of 120° radius. Such shape maximises probability for the sound waves to impacting the solid particles. This would not be possible without the concentrator (2.1).

The concentrator (2.1) is connected to piezoceramic rings (3) with copper plates (8) between them for generating ultrasound waves via an elongated connecting body (4) having a through hole (4.1) connected fluidly with a through hole (2.1′′′′) of the concentrator (2.1). The generated sound waves are propagating though said through hole (4.1, 2.1′′′′) in the direction of the uniform and straight through body (1.0) of the acoustic chamber (1).

The device for acoustic agglomeration of ultrafine particles further comprises a stabiliser (5), for stabilising and securing the acoustic generator (2) to the third branch (1.3) at its free end (1.3') in such a way that the uniform and straight through body (1.0) facing surface (2.1") of the concentrator (2.1) is positioned in the third branch (1.3) essentially inside of the hollow of the third branch (1.3) and at the end connecting the third branch (1.3) to the uniform and straight through body (1.0). One end (5.1) of the stabiliser (5) is used for attaching to the elongated connecting body (4) by encircling the radius of the elongated connecting body (4) and fastening both elements together. Another end (5.2) of the stabiliser (5) is used for attaching the stabilised to the free end (1.3') of the third branch (1.3). The stabiliser (5) and part of the third branch (1.3), extending from the free end up to the perimeter of the concentrator (2.1), delimits a substantially empty space between the inner surface of the stabiliser (5), and the concentrator (2.1) and the elongated connecting body (4). The delimited space improves acoustic performance of the acoustic generator.

The device for acoustic agglomeration of ultrafine particles further comprises acoustic insulation layer (6) for isolating the entire device up to the gas flow inlet (1.1') and outlet (1.2') of the acoustic chamber (1) according to the invention.

Agglomeration can take place both under normal conditions and at high temperature up to 200 °C of gas flow and high relative humidity, up to 85% relative humidity. When the frequency is 20 kHz±0.2 kHz, the pressure level is 130-140 dB, and the direction of the acoustic impact is perpendicular to the direction of the gas flow, the amount of ultrafine solid particles in the gas flow is reduced by 70%. The process of particle agglomeration takes less than 1s.

The invention can be applied in a short section of a contaminated gas duct. Concentration of ultrafine solid particles is preferably from 0.1 mg/m³ to 50 mg/m³ in the particle agglomeration zone.

Although the present description includes numerous characteristics and advantages of the invention together with structural details and features, the description is given as an example of the invention embodiment. There may be changes in the details, especially in the form, size, and layout of materials without departing from the principles of the invention, in accordance with the widely understood definition of terms used in claims.

### Reference list

[1] B. F. Ng, J. W. Xiong, and M. P. Wan, "Application of acoustic agglomeration to enhance air filtration efficiency in air-conditioning and mechanical ventilation (ACMV) systems," PLoS ONE, vol. 12, no. 6, p. e0178851, Jun. 2017, doi: 10.1371/journal.pone.0178851.
[2] E. Riera, I. González-Gomez, G. Rodriguez, and J. A. Gallego-Juárez, "Ultrasonic agglomeration and preconditioning of aerosol particles for environmental and other applications," in Power Ultrasonics, Elsevier, 2015, pp. 1023-1058. doi: 10.1016/B978-1 -78242-028-6.00034-X.
[3] J. A. Gallego-Juarez, G. Rodriguez-Corral, and L. Gaete-Garreton, "An ultrasonic transducer for high power applications in gases," Ultrasonics, vol. 16, no. 6, pp. 267-271, Nov. 1978, doi: 10.1016/0041-624X(78)90053-7.
[4] J. A. Gallego-Juarez, E. Riera, and G. Rodriguez, "Evaluation of an ultrasonic agglomerator as a preconditioner for the removal of fine aerosol particles," Conference: Ultrasonic International 79, At: Graz, Austria, vol. Conference Proceedings, pp. 227-232, 1979.
[5] A. Ramos-Fernandez, J. A. Gallego-Juarez, and F. Montoya-Vitini, "Automatic system for dynamic control of resonance in high power and high Q ultrasonic transducers," Ultrasonics, vol. 23, no. 4, pp. 151-156, Jul. 1985, doi: 10.1016/0041 -624X(85)90023-X.
[6] Khmelev, V.N., Nesterov, V.A. & Shalunov, A.V. Raising the Efficiency of Coagulation of Dispersed Particles by the Action of Ultrasonic Vibrations on Gas-Dispersed Flows in Inertial Dust Collectors. J Eng Phys Thermophy 93, 1335-1346 (2020). https://doi.org/10.1007/s10891-020-02239-9
[7] Barmatz, M. B. Acoustic agglomeration methods and apparatus. National Aeronautics and Space Administration NASA. United States Patent. Patent No. 4,475,921, 1984, 6 p.

## Claims

1. A device for acoustic agglomeration of ultrafine particles comprising an acoustic chamber for agglomeration of ultrafine particles and means for producing sound waves for acoustic agglomeration of ultrafine particles **characterised in that** the acoustic chamber (1) comprises
a first branch (1.1) for gas flow entering the acoustic chamber, a second branch (1.2) for gas flow leaving the acoustic chamber (1), where both said branches (1.1, 1.2) form a uniform and straight through body (1.0) with two openings (1.1', 1.2') of the same dimensions at each end, and a third branch (1.3) forming cylindrical hollow body and fluidly connected to the uniform and straight through body (1.0),
an acoustic generator (2) attached to the free end (1.3') of the third branch (1.3) for emitting acoustic waves towards gas flow in the uniform and straight through body (1.0)
where the gas flow inlet (1.1') and outlet (1.2') of the acoustic chamber (1) are concentric and the point of maximum pressure of the acoustic wave emitted by the acoustic generator (2) coincides with a point in the centre line of the flow inlet (1.1') and the outlet (1.2') and the agglomeration zone encapsules entire diameter of the uniform and straight through body (1.0) straight above the entry point of sound waves from the third branch (1.3),
where the acoustic generator (2) comprises a concentrator (2.1) for forming agglomeration zone essentially having diameter of the third branch (1.3),
where the concentrator (2.1) comprises a widening body with a through hole (2.1′′′′) at the centre and covers the entire diameter of the third branch (1.3) to which the acoustic generator (2) is connected and disposed therein,
where the concentrator (2.1) is connected to piezoceramic rings (3) with copper plates (8) between them for generating ultrasound waves via an elongated connecting body (4) having a through hole (4.1) connected fluidly with a through hole (2.1′′′′) of the concentrator (2.1),
a stabiliser (5), for stabilising and securing the acoustic generator (2) to the third branch (1.3) at its free end (1.3') in such a way that the uniform and straight through body (1.0) facing surface (2.1") of the concentrator (2.1) is positioned in the third branch (1.3) essentially inside of the hollow of the third branch (1.3) and at the end connecting the third branch (1.3) to the uniform and straight through body (1.0),
where one end (5.1) of the stabiliser (5) is being attached to the elongated connecting body (4) by encircling the radius of the elongated connecting body (4) where both elements are fastened together and another end (5.2) of the stabiliser (5) is being attached to the free end (1.3') of the third branch (1.3),
the device for acoustic agglomeration of ultrafine particles further comprises acoustic insulation layer (6).

2. Device according to claim 1, where the third branch (1.3) is connected at right angle to top part of the uniform and straight through body (1.0) of the acoustic chamber (1) and the third branch (1.3) extends from the first branch (1.1) and second branch (1.2) forming a uniform and straight through body (1.0) in such a way that the gravity vector would make an angle >0° with central axis of the third branch (1.3) parallel to the length of the hollow of the third branch (1.3).

3. Device according to claim 1 or 2, where the acoustic wave path from the acoustic generator (2) is directed downward perpendicularly to the uniform and straight through body (1.0) and gas flow and parallel to the hollow of the third branch (1.3).

4. Device according to any one of claims 1-3, where surface (2.1") of the concentrator (2.1) facing the uniform and straight through body (1.0) has a preferable curvature of 180° radius while surface (2.1′′′) on the opposite side of the concentrator (2.1) has a preferable curvature of 120° radius.

5. Device according to any one of claims 1-4, where the stabiliser (5) and part of the third branch (1.3), extending from the free end up to the perimeter of the concentrator (2.1), delimits a substantially empty space between the inner surface of the stabiliser (5), and the concentrator (2.1) and the elongated connecting body (4).

6. Device according to any one of preceding claims, where acoustic generator (2) comprises a concentrator (2.1) for forming agglomeration zone essentially having diameter of the third branch (1.3) which when equal to the diameter of the uniform and straight through body (1.0) of the acoustic chamber (1) covers the entire volume of space at the cross section of the uniform and straight through body (1.0) and the third branch (1.3).

7. Device according to any one of preceding claims, where the device for acoustic agglomeration of ultrafine particles also comprises means for measuring concentration of particles before they enter the acoustic chamber (1) and outside the acoustic chamber (1).
